# EUROPÄISCHE PATENTANMELDUNG

(11) **EP 1 936 209 A2**
(43) Veröffentlichungstag der Anmeldung: **25.06.2008**
(21) Anmeldenummer: 07020950.7
(22) Anmeldetag: 25.10.2007
(51) Int. Cl.: F16B 2/10, F16B 2/12

(54) **Vorrichtung und Verfahren zum Arretieren von Apparaten**

(30) Priorität: 22.12.2006 DE 102006061072
(71) Anmelder: Linde Aktiengesellschaft, 80807 München (DE)
(72) Erfinder: Himmen, Hans-Rudolf, 85778 Haimhausen (DE)

(57) **Zusammenfassung**

Die vorliegende Erfindung betrifft ein System zum Arretieren von Apparaten (1) mit einem Profilrahmen (5) zur Aufnahme mindestens eines Apparates. Desweiteren betrifft die Erfindung eine Vorrichtung zur Aufnahme von einem oder mehreren Apparaten (1), die einen Profilrahmen (5) aufweist, sowie einen modifizierten Apparatefuß (2) und ein Verfahren zum Arretieren. Das erfindungsgemäße System ist dadurch gekennzeichnet, dass der Apparat für den Eingriff eines Arretierungshakens (3) modifizierte Apparatefüße (2) aufweist und der Profilrahmen (5) für jeden aufzunehmenden Apparatefuß mindestens eine Aufnahme (6) und mindestens einen Arretierunghaken (3) und einen Entriegelungsschieber (7) aufweist, wobei keine der Arretierung des Apparates dienenden Schraubverbindungsteile vorgesehen sind.

## Beschreibung

Die vorliegende Erfindung betrifft ein System zum Arretieren von Apparaten mit einem Profilrahmen zur Aufnahme mindestens eines Apparates. Desweiteren betrifft die Erfindung eine Vorrichtung zur Aufnahme von einem oder mehreren Apparaten, die einen Profilrahmen aufweist, sowie einen modifizierten Apparatefuß und ein Verfahren zum Arretieren.

Eine verfahrenstechnische Anlage weist häufig ein Rahmengestell auf, in das ein oder mehrere Apparate als Komponenten der Anlage eingebracht und dort festgeschraubt werden. Unter den Komponenten der Anlage kann man sich beispielsweise Wärmetauscher, Elektroerhitzer oder Behälter zusammen mit Armaturen und Komponenten der Meß- und Regeltechnik sowie die Verrohrung vorstellen.

Die Verbindung der Apparate mit dem Rahmengestell geschieht in der Regel mit Schraubverbindungen. Hierbei werden die Apparatefüße mit vier oder mehr Schrauben und Muttern mit dem Rahmengestell verbunden.

Es gibt eine ganze Reihe von Einsatzfällen, z.B. bei Versuchs- oder Pilotanlagen, in denen häufig Apparate ausgetauscht werden müssen. Dies ist immer dann der Fall, wenn ein Apparat durch einen Apparat anderer Art oder mit anderen Leistungsdaten ersetzt werden soll.

Je nach Kompaktheit der Anlage und je nach den Platzverhältnissen im und um das Rahmengestell sind die herkömmlich verwendeten Schraubverbindungen zwischen den Apparatefüßen und dem Rahmengestell nur schwer zugänglich oder manchmal auch erst nach Entfernung anderer Anlagenteile zugänglich. Der Aufwand für den Austausch und die Befestigung anderer Apparate in der Anlage kann demnach hoch sein.

Aufgabe der vorliegenden Erfindung ist es, die Arretierung von Apparaten in einem Rahmengestell zu verbessern und dabei besonders den Aufwand beim Austausch von Apparaten zu verringern .

Die gestellte Aufgabe wird durch eine System gelöst das dadurch gekennzeichnet ist, dass der Apparat für den Eingriff eines Arretierungshakens modifizierte Apparatefüße aufweist und der Profilrahmen für jeden aufzunehmenden Apparatefuß mindestens eine Aufnahme und mindestens einen Arretierunghaken und einen Entriegelungsschieber aufweist, wobei keine der Arretierung des Apparates dienenden Schraubverbindungsteile vorgesehen sind.

Bevorzugt weist der Profilrahmen ein U-Profil auf.

Besonders bevorzugt sind pro zu arretierendem Apparatefuß zwei Arretierungshaken vorgesehen.

Zweckmäßigerweise sind die Arretierungshaken drehbar am Profilrahmen befestigt. Beispielsweise sind sie vorteilhaft an ihrem unteren Ende am Profilrahmen befestigt.

Besonders vorteilhaft sind die Arretierungshaken zwischen Querstreben im Profilrahmen befestigt.

Gemäß einer vorteilhaften Weiterbildung der Erfindung ist an den Arretierungshaken je eine Rückholeinrichtung vorgesehen. Je nach Anwendungsfall kommt beispielsweise eine Rückholfeder, eine Gewindestange oder eine Zahnstange als Rückholeinrichtung vorteilhaft zum Einsatz.

Vorteilhafterweise ist die Rückholeinrichtung so ausgebildet, dass sie den Arretierungshaken in einer senkrechten Position hält.

Zweckmäßigerweise ist der Entriegelungsschieber im Profilrahmen zumindest in eine Richtung verschiebbar angebracht.

Gemäß einer besonders vorteilhaften Ausgestaltung der Erfindung weist der Apparatefuß eine Einrastmulde- oder öffnung auf, die ein Einrasten des Arretierungshakens ermöglicht.

Die gestellte Aufgabe der vorliegenden Erfindung wird desweiteren durch eine Vorrichtung gelöst, die dadurch gekennzeichnet ist, dass der Profilrahmen für jeden aufzunehmenden Apparatefuß mindestens eine Aufnahme und mindestens einen Arretierunghaken und einen Entriegelungsschieber aufweist, wobei keine der Arretierung des Apparates dienenden Schraubverbindungsteile vorgesehen sind.

Desweiteren wird die gestellte Aufgabe durch einen Apparatefuß gelöst, der dadurch gekennzeichnet ist, dass der Apparatefuß für den Eingriff eines Arretierungshakens modifiziert ausgebildet ist.

Bevorzugt weist der Apparatefuß eine Einrastmulde- oder öffnung auf, die ein Einrasten des Arretierungshakens ermöglicht.

Verfahrensseitig wird die gestellte Aufgabe dadurch gelöst, dass Arretierungshaken beim Hineinsetzen des Apparates in die Aufnahme durch die Apparatefüße zur Seite gedrückt werden und, sobald sich der Apparat an seiner endgültigen Position befindet, die Arretierungshaken durch je eine Rückholeinrichtung wieder in ihre ursprüngliche Position gezogen werden, wodurch der jeweilige Apparatefuß arretiert wird.

Die vorliegende Erfindung weist eine Reihe von Vorteilen auf:

Es wird ein einfaches und schnelles Austauschen von Apparaten ermöglicht. Auf schwer zugängliche und aufwendig zu lösende und zu befestigende Schraubverbindungen kann verzichtet werden.

Der zu wechselnde Apparat kann z.B. mit einem Gabelstapler einfach in das Rahmengestell gestellt werden und dort automatisch oder mit wenigen einfachen Handgriffen arretiert werden. Die Lösung der Arretierung ist ebenso einfach durchführbar. Der Aufbau des erfindungsgemäßen Systems und seiner Komponenten ist einfach, robust, nahezu wartungsfrei und vielfältig einsetzbar.

Die Erfindung sowie weitere Ausgestaltungen der Erfindung werden im Folgenden anhand der in den Figuren dargestellten Ausführungsbeispiele näher erläutert. Im Einzelnen zeigen:
- Figur 1: eine Seitenansicht eines erfindungsgemäßen Systems,
- Figur 2: eine Draufsicht zum System der Figur 1,
- Figur 3: ein Frontansicht eines erfindungsgemäßen Systems mit modifizierter Rückholeinrichtung (Trapezgewinde),
- Figur 4: eine Frontansicht eines erfindungsgemäßen Systems mit modifizierter Rückholeinrichtung (Zahnstange).

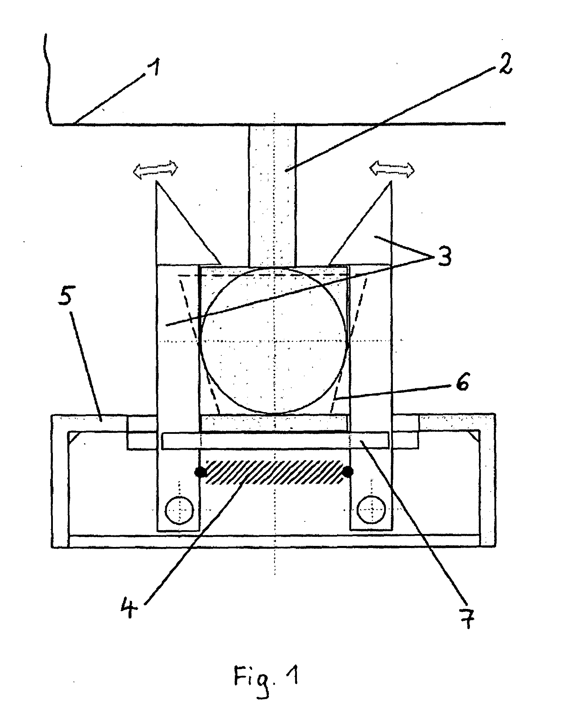

In der Figur 1 ist ein Apparat 1 als Ausschnitt dargestellt, der auf einem Apparatefuß 2 ruht. Der Apparatefuß 2 ist durch die Arretierungshaken 3 arretiert, welche ihrerseits von der Rückholeinrichtung 4 in dieser Position gehalten werden. Der Apparatefuß 2 wird von sog. Aufnahmen 6 aufgenommen, die am Profilrahmen 5 befestigt sind. Die Aufnahmen 6 sind in diesem Beispiel als Aufnahmeecken 6 ausgebildet. Zum Lösen der Arretierung steht ein Entriegelungsschieber 7 zur Verfügung. In diesem Beispiel ist als Rückholeinrichtung 4 eine Rückholfeder 4 vorgesehen.

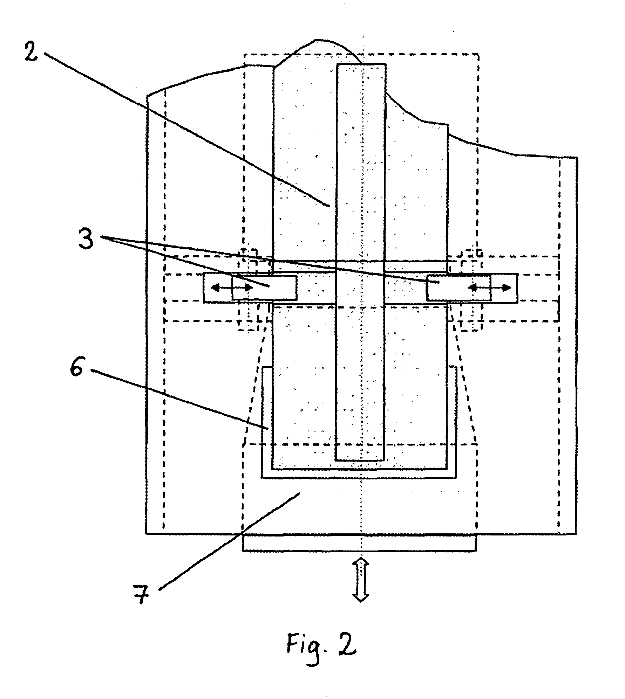

Figur 2 zeigt eine Draufsicht des erfindungsgemäßen Systems, das in der Figur 1 als Seitenansicht dargestellt ist. Die einzelnen Teile des Systems sind mit den Bezugszeichen aus der Figur 1 bezeichnet.

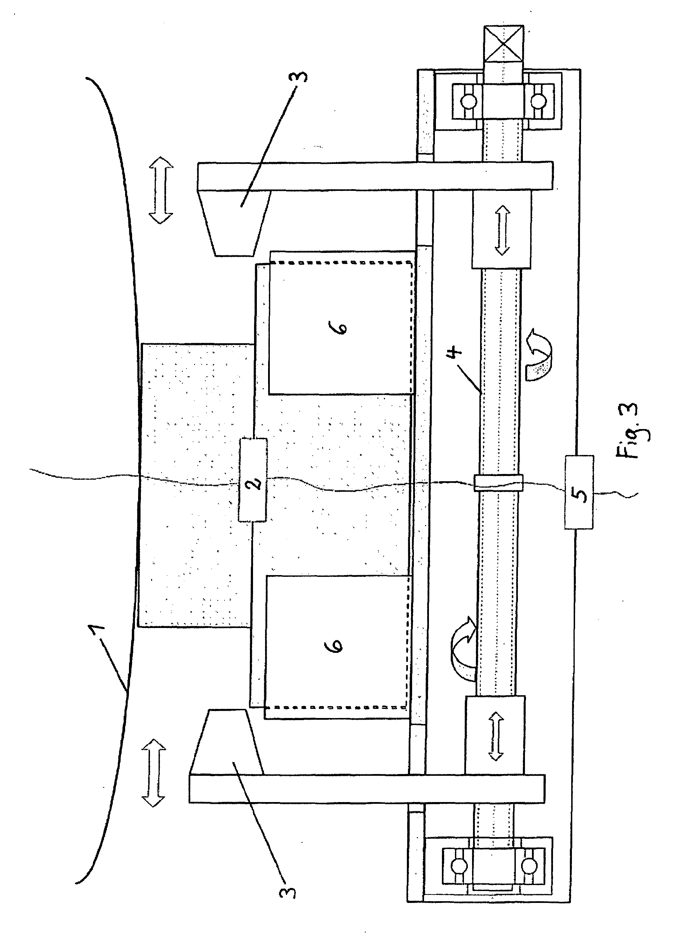

In der Figur 3 ist eine Frontansicht eines erfindungsgemäßen Systems mit einer modifizierten Rückholeinrichtung 4 dargestellt. Die Rückholeinrichtung 4 ist in diesem Beispiel als Trapezgewinde 4 (½Rechts-, ½ Linksgewinde) ausgebildet. Die restlichen Teile des dargestellten Systems entsprechen denen in den Figuren 1 und 2 und tragen die entsprechenden Bezugszeichen.

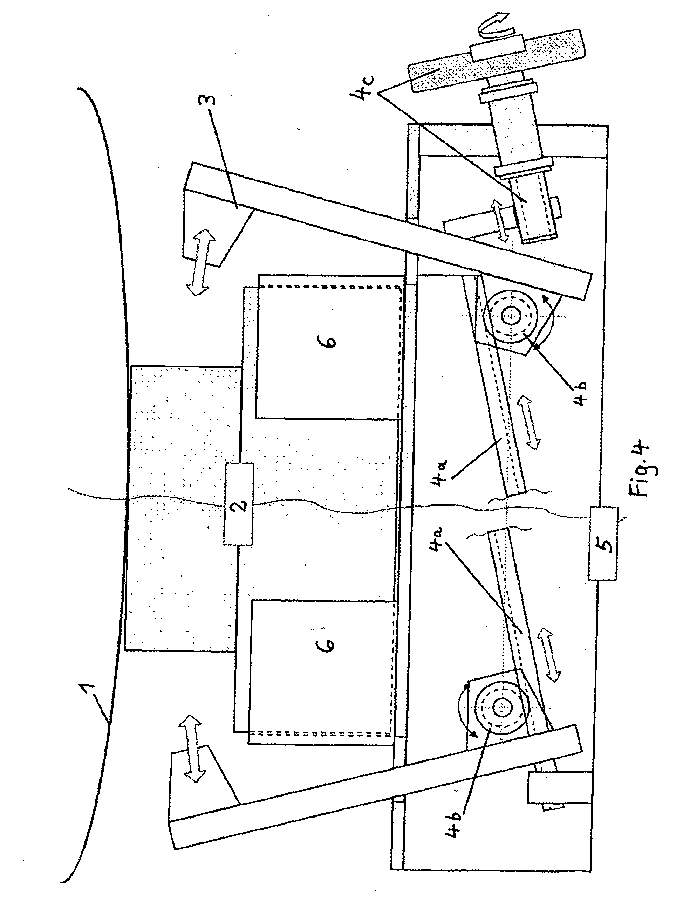

Die Figur 4 zeigt eine weitere Frontansicht eines erfindungsgemäßen Systems mit einer weiteren alternativen Lösung für die Rückholeinrichtung 4. In diesem Beispiel kommt eine Rückholeinrichtung 4 zum Einsatz, die eine Zahnstange 4a und Zahnräder 4b aufweist sowie ein Verstellrad 4c mit Gewindezapfen. Die restlichen Teile des dargestellten Systems entsprechen wiederum denen in den Figuren 1, 2 und 3 und tragen die entsprechenden Bezugszeichen.
Die Funktionsweise des in den Figuren 1 und 2 dargestellten Systems ist wie folgt: Der Apparat 1, z.B. ein Wärmetauscher 1 oder ein anderer Apparat 1, wird z.B. mit einem Gabelstapler von oben in die Aufnahmen 6 gestellt. Beim Absenken der Wärmetauscherfüße 2 werden die Arretierungshaken 3 zur Seite gedrückt. Sobald sich der Wärmetauscherfuß 2 in seiner Endposition in den Aufnahmen 6 befindet, werden die Arretierungshaken 3 durch die Rückholfeder 4 wieder in eine senkrechte Position gezogen und arretieren so den Wärmetauscherfuß 2 nach oben hin. Die Aufnahmen 6 sind so gestaltet, dass der Wärmetauscher 1 auch axial und quer zu seiner Achse fixiert wird. Es ergibt sich somit zusammen mit den Arretierungshaken 3 eine feste Verbindung mit dem Profilrahmen 5.

Für den Fall, dass diese Verbindung gelöst werden soll, wird der Entriegelungsschieber 7 seitlich so verschoben, dass er bedingt durch sein Profil (vgl. Figur 2) die Arretierungshaken 3 soweit auseinanderdrückt, dass sie die Wärmetauscherfüße 2 freigeben und der Wärmetauscher 1 aus dem Profilrahmen 5 gehoben werden kann. Der Entriegelungsschieber 7 wird vorteilhaft innerhalb des U-Profils des Profilrahmens 5 durch entsprechende Durchgangsöffnungen in den Querverstrebungen (nicht dargestellt) geführt und kann durch Federkraft in seine Ausgangsposition zurückbewegt werden.

Folgende Angaben dienen als Beispiel für eine vorteilhafte Ausführung eines erfindungsgemäßen Systems. Daneben exisitieren eine Vielzahl ebenso vorteilhafter Ausgestaltungen mit anderen Abmessungen und anderer Formgebung.

Als Beispiel kann ein U-Profil mit 400 x 120 x 50 mm (Länge x Breite x Höhe) als Profilrahmen 5, eine drehbare Befestigung der Arretierungshaken 3 mit Bolzen oder Schrauben mit einem Durchmesser von 6 - 8 mm zwischen zwei Querverstrebungen innerhalb des U-Profils 5 sowie eine Rückholfeder 4 als Zugfeder mit Hakenöse o.ä. und einer Länge von ca. 50 mm und einem Durchmesser von ca. 6 -8 mm vorgesehen sein.

Desweiteren können in diesem Beispiel als Aufnahmen 6 aus Flachstahl, trapez- oder v-förmig (abgerundet) gebogen, seitlich geschlossen und aufgeschweißt auf den Profilrahmen 5 zum Einsatz kommen.
Als Beispiel für eine besonders vorteilhafte Ausgestaltung werden zwei Arretierungspunkte pro Apparatefuß 2 mit zwei Aufnahmen 6, je zwei Arretierungshaken 3 und einem Entriegelungsschieber 7 angegeben.

Als Beispiel für einen besonders geeigneten Apparatefuß 2 dient ein Rohr mit einem Durchmesser von ca. 40 mm und einer Länge von ca. 350 mm mit oben aufgeschweißten Aufnahmen 6 im Bereich der Arretierungshaken 3.

In der Figur 3 ist ein ähnlicher Aufbau in Bezug auf den Profilrahmen 5, die Apparatefüße 2 und die Aufnahmen 6 gezeigt. Jedoch werden die Arretierungshaken 3 beim Einbringen des Apparates in den Profilrahmen 5 in diesem Beispiel von der Seite her über den Apparatefuß 2 bewegt. Dies geschieht durch ein im Profilrahmen 5 gelagertes zweigängiges Trapezgewinde 4, auf dem die Arretierungshaken 3 durch Drehen (auf der Bedienerseite) axial zusammen- oder auseinandergefahren werden können. Die Arretierungshaken 3 sind durch entsprechende Durchgangsöffnungen im Profilrahmen 5 nach oben geführt. Hierdurch wird zugleich ein Mitdrehen verhindert.

In der Figur 4 ist wiederum ein ähnlicher Aufbau in Bezug auf den Profilrahmen 5 , die Apparatefüße 2 und die Aufnahmen 6 gezeigt, jedoch werden die Arretierungshaken 3 von der Seite her über den Apparatefuß 2 gekippt. Dies geschieht durch eine Zahnstange 4a (½ oben verzahnt, ½ unten verzahnt), die auf einer Seite von oben in ein fest mit dem Arretierungshaken 3 verbundenes Zahnrad 4b greift, auf der anderen Seite von unten. Die Arretierungshaken 3 sind im Profilrahmen 5 drehbar befestigt. Die axiale Bewegung der Zahnstange 4a erfolgt durch ein Verstellrad 4c mit Gewindezapfen. Letzterer sitzt in einem mit der Zahnstange 4a verbundenen Zwischenstück (mit Gewindebohrung). Die Führung der Zahnstange 4a wird innerhalb des U-Profils des Profilrahmens 5 realisiert.

## Patentansprüche

1. System zum Arretieren von Apparaten mit einem Profilrahmen zur Aufnahme mindestens eines Apparates, **dadurch gekennzeichnet, dass** der Apparat für den Eingriff eines Arretierungshakens modifizierte Apparatefüße aufweist und der Profilrahmen für jeden aufzunehmenden Apparatefuß mindestens eine Aufnahme und mindestens einen Arretierunghaken und einen Entriegelungsschieber aufweist, wobei keine der Arretierung des Apparates dienenden Schraubverbindungsteile vorgesehen sind.

2. Vorrichtung zur Aufnahme von einem oder mehreren Apparaten, die einen Profilrahmen aufweist, **dadurch gekennzeichnet, dass** der Profilrahmen für jeden aufzunehmenden Apparatefuß mindestens eine Aufnahme und mindestens einen Arretierunghaken und einen Entriegelungsschieber aufweist, wobei keine der Arretierung des Apparates dienenden Schraubverbindungsteile vorgesehen sind.

3. Vorrichtung nach Anspruch 2, **dadurch gekennzeichnet, dass** der Profilrahmen ein U-Profil aufweist.

4. Vorrichtung nach Anspruch 2 oder 3, **dadurch gekennzeichnet, dass** pro zu arretierendem Apparatefuß mindestens zwei, insbesondere vier Arretierungshaken vorgesehen sind.

5. Vorrichtung nach einem der Ansprüche 2 bis 4, **dadurch gekennzeichnet, dass** die Arretierungshaken drehbar am Profilrahmen befestigt sind.

6. Vorrichtung nach einem der Ansprüche 2 bis 5, **dadurch gekennzeichnet, dass** die Arretierungshaken zwischen Querstreben im Profilrahmen befestigt sind.

7. Vorrichtung nach einem der Ansprüche 2 bis 6, **dadurch gekennzeichnet, dass** an den Arretierungshaken je eine Rückholeinrichtung vorgesehen ist.

8. Vorrichtung nach Anspruch 7, **dadurch gekennzeichnet, dass** die Rückholeinrichtung so ausgebildet ist, dass sie den Arretierungshaken in einer senkrechten Position hält.

9. Vorrichtung nach einem der Ansprüche 2 bis 8, **dadurch gekennzeichnet, dass** der Entriegelungsschieber im Profilrahmen zumindest in eine Richtung verschiebbar angebracht ist.

10. Apparatefuß **dadurch gekennzeichnet, dass** der Apparatefuß für den Eingriff eines Arretierungshakens modifiziert ausgebildet ist.

11. Apparatefuß nach Anspruch 10, **dadurch gekennzeichnet, dass** der Apparatefuß eine Einrastmulde- oder öffnung aufweist, die ein Einrasten des Arretierungshakens ermöglicht.

12. Verfahren zum Arretieren von Apparaten bei dem mindestens ein Apparat in dafür vorgesehene Aufnahmen auf einen Profilrahmen gesetzt wird, **dadurch gekennzeichnet, dass** Arretierungshaken beim Hineinsetzen des Apparates in die Aufnahmen durch die Apparatefüße zur Seite gedrückt werden und, sobald sich der Apparat an seiner endgültigen Position befindet, die Arretierungshaken durch je eine Rückholeinrichtung wieder in ihre ursprüngliche Position gezogen werden, wodurch der jeweilige Apparatefuß arretiert wird.
